# EUROPÄISCHE PATENTSCHRIFT

(11) **EP 3 701 465 B1**
(45) Veröffentlichungstag und Bekanntmachung des Hinweises auf die Patenterteilung: **07.12.2022**
(21) Anmeldenummer: 18795480.5
(22) Anmeldetag: 24.10.2018
(51) Int. Cl.: G06Q 20/00, G06Q 20/32, G07F 7/06, G07F 17/00, H04W 4/021

(54) **VERFAHREN ZUM BETRIEB EINES ELEKTRONISCH GEREGELTEN RÜCKGABESYSTEMS**
METHOD FOR OPERATING AN ELECTRONICALLY CONTROLLED RETURN SYSTEM
PROCÉDÉ SERVANT À FAIRE FONCTIONNER UN SYSTÈME DE RESTITUTION À RÉGLAGE ÉLECTRONIQUE

(30) Priorität: 26.10.2017 DE 102017125074
(43) Veröffentlichungstag der Anmeldung: 02.09.2020
(73) Patentinhaber: Wieth, Franz, 82178 Puchheim (DE); Filosi, Andreas, 82178 Puchheim (DE)
(72) Erfinder: Wieth, Franz, 82178 Puchheim (DE); Filosi, Andreas, 82178 Puchheim (DE)
(74) Vertreter: Braun-Dullaeus Pannen Emmerling Patent- & Rechtsanwaltspartnerschaft mbB
(86) Internationale Anmeldenummer: PCT/EP2018/079220
(87) Internationale Veröffentlichungsnummer: WO 2019/081613

(56) Entgegenhaltungen:
- EP-A1- 3 163 523
- WO-A1-2006/087070
- WO-A1-2010/144054
- WO-A1-2017/114525
- WO-A2-2006/102183
- WO-A2-2007/002941
- US-A1- 2013 261 964
- US-A1- 2017 228 847

## Beschreibung

Die Erfindung betrifft ein Verfahren zum Betrieb eines elektronisch geregelten Rückgabesystems für ausgeliehene Gegenstände, insbesondere für von Hand bewegbare Transportwagen.

Von Hand bewegbare Transportwägen, wie z.B. Einkaufswagen eines Supermarktes, sind oft mit Pfandschlössern ausgestattet. Auf diese Weise können sie an einem Sammelpunkt zusammengefahren und über eine Kette mit Schlüssel miteinander fest verbunden werden. Dies erfordert ein geordnetes "Nesten" der Transportwägen, also ein ordnungsgemäße Ineinanderschieben von Einkaufswagen in einer Reihe. Die Pfandschlösser ermöglichen es dabei, dass der in einer Reihe jeweils erste Transportwagen fest mittels Kette und Schlüssel mit einer Sammelstelle, z.B. einer Einkaufswagengarage, verbunden wird. Weitere Einkaufswagen werden in diesen eingeschoben und mittels ihres Pfandschlosses miteinander verbunden. Als Pfand zum Entkoppeln des Schlüssels mit Kette dient eine Münze, ein Chip in Form einer Münze, oder eine spezielle Karte. Jeder, der einen Transportwagen leihweise nutzen möchte, muss eines dieser Auslösemittel verwenden.

Um solch ein Pfandschloss zu vermeiden, aber trotzdem sicherzustellen, dass der Nutzer den Transportwagen nach dem Entnehmen und Nutzen wieder geordnet an die Sammelstelle zurückbringt, gibt es fest installierte Systeme, die verriegeln, oder wie Schranken funktionieren und ein unberechtigtes Entnehmen des Transportwagens ohne eine Nutzungsgebühr oder ein Pfand, verhindern.

Diese haben den Nachteil, dass es einen hohen Investitionsaufwand bedarf um solche Systeme zu installieren. Des Weiteren ist eine solche Sammelstelle, wenn Sie einmal mit einem solchen starren, zentralen System ausgestattet ist, unflexibel und nur mit hohem Aufwand an einen anderen Ort zu versetzen. Auslösemittel als Pfand oder Nutzungsgebühr wie Münzen oder Karten werden für diese Systeme jedoch trotzdem benötigt um die Verriegelung zu öffnen.

Als Alternative zu Münzen oder Karten als Pfand für ein Pfandsystem, kann ein Belohnungssystem angewendet werden, in der Art, dass Nutzer eines Transportwagens beim Zurückbringen des Transportwagens eine Belohnung als Anreiz erhalten. Diese Belohnung kann in unterschiedlichster Weise erfolgen (Bonuspunkte, Rabatte, Teilnahme an einem Gewinnspiel etc.). Solche Belohnungssysteme sind bekannt.

Nachteilig ist bei diesen, dass die Belohnung nicht elektronisch durch eine Einrichtung am Transportwagen generiert wird und deshalb eine zusätzliche Einrichtung wie ein Ausgabeautomat für die Belohnung benötigt wird.

Ein weiterer Nachteil ist, dass das ordnungsgemäße Nesten der Transportwagen ohne weitere Einrichtungen in der Sammelstelle nicht sichergestellt wird.

Aus dem Dokument WO 2007/002941 A2 ist ein System bekannt, bei dem der Standort eines in einem Geschäft dargebotenen Produkts angezeigt werden kann. Dies erfolgt mittels RFID-Tags, die an den Regalen oder Verkaufsständern des Geschäfts positioniert sind und jeweils einem der dort präsentierten Produkte zugeordnet sind. Ein innerhalb der Verkaufsfläche sich befindender Einkaufswagen liest die in seiner Rechweite befindlichen RFID-Tags aus, bestimmt daraus seine Position und Lage innerhalb der Verkaufsfläche und führt den Nutzer des Einkaufswagens zum dem gewünschten Produkt.

Diese Anmeldung stellt sich die Aufgabe, ein zu einer Pfandschlosslösung alternatives Verfahren für ein Rückgabesystem vorzuschlagen, welches ein ordnungsgemäßes Nesten entliehener Gegenstände in der Sammelstelle gewährleistet.

Diese Aufgabe wird mit dem Verfahren zum Betrieb eines elektronisch geregelten Rückgabesystems gemäß Anspruch 1 gelöst. Einige von hierzu vorteilhaften Ausführungsformen werden in den von Anspruch 1 abhängigen Ansprüchen gefasst. Ein Kerngedanke der Erfindung ist es, dass der ausgeliehene Gegenstand fest mit einem Kommunikationsmodul verbunden ist, welches ein drahtlos gesendetes erstes Signal A eines Sendemittels einer Sammelstelle empfängt, wobei das Kommunikationsmodul ein Mittel zur Auswertung der Position und/oder Lage des ausgeliehenen Gegenstands umfasst, welches das erste Signal A zur Positionsbestimmung und/oder Lagebestimmung des ausgeliehenen Gegenstands relativ zum Sendemittel nutzt.

Ein ausgeliehener Gegenstand im Sinne dieser Anmeldung ist beispielsweise ein von einem Geschäft dem Kunden für seinen Einkauf zur Verfügung gestellter Gegenstand. Ein Beispiel hierfür ist ein von Hand bewegbarer Transportwagen, insbesondere ein Einkaufswagen. In diesem Zusammenhang könnte die Sammelstelle die hierzu gehörende Einkaufswagen-Garage sein. Ein anderes Beispiel ist ein Korb, der dem Kunden eines Geschäfts zum Einkauf zur Verfügung gestellt wird und nach dem Einkauf an einer Sammelstelle, beispielsweise im Kassenbereich, zurückgestellt werden kann. Ein weiterer für den Einkauf zur Verfügung gestellter Gegenstand ist die vom Geschäft ausgegebene Halterung für ein dem Nutzer zur Verfügung stehendes Kommunikations-Endgerät.

Je nach Ausbildung der Empfangsmittel kann die Positionsbestimmung und/oder Lagebestimmung mittels Messung der Signalstärke und/oder Peilung des Sendemittels der Sammelstation erfolgen. In einer besonders einfachen Ausführungsform kann hierfür eine Antenne in Form eines Peilrahmens genutzt werden. Um die Lage des entliehenen Gegenstandes noch besser bestimmen zu können, werden vorzugsweise Teile der Antenne in bestimmte Richtungen hin abgeschirmt. Alternative Ausführungsformen nutzen insbesondere zur Lagebestimmung zwei oder mehr voneinander beabstandete Kommunikationsmodule oder ein Kommunikationsmodul mit voneinander beabstandeten Antennen. Ist die Position und/oder die Lage des ausgeliehenen Gegenstands in Bezug auf die Sammelstelle bekannt, lässt sich hierüber feststellen, ob der ausgeliehene Gegenstand in der Sammelstelle eingestellt ist.

Ebenfalls ist es möglich, an einer Sammelstelle eine Mehrzahl von ein erstes Signal A aussendenden Sendemittel vorzusehen, die von einander beabstandet sind. Dies ermöglicht es dem Kommunikationsmodul, seinen Standort mittels Triangulation noch genauer zu bestimmen. Von Vorteil ist es, wenn das oder die Sendemittel von dem Kommunikationsmodul bereitgestellt werden. Dies ermöglicht es, das Verfahren bzw. das System möglichst gleichteilig auszubilden.

Bei einer Sammelstelle, in der die ausgeliehenen Gegenstände in Reihen zurückgestellt werden, ist es von Vorteil, wenn pro Reihe ein Sendemittel vorgegeben ist. Dies ermöglicht es, den Standort des entliehenen Gegenstandes noch besser zu bestimmen und sogar eine bestimmte Position reihengenau vorzugeben. Hierdurch kann auch vermieden werden, dass einzelne Reihen zu lang werden und so an der Sammelstelle überstehen, während andere Reihen noch Platz haben. In einer besonders bevorzugten Ausführungsform sendet jedes dieser Sendemittel ein erstes Signal A unterschiedlichen Inhalts oder Frequenz, sodass ein Sendemittel einer bestimmten Reihe zugeordnet werden kann.

Wesentlich ist es, dass der entliehene Gegenstand und das Kommunikationsmodul einander zuzuordnen ist. Für einige der bevorzugten Ausführungsformen ist es darüber hinaus erforderlich, dass die Position und Lage des Kommunikationsmoduls in Bezug auf den entliehenen Gegenstand bekannt ist. Dies gelingt am einfachsten, wenn das Kommunikationsmodul fest mit dem entliehenen Gegenstand verbunden ist. Fest im Sinne dieser Anmeldung bedeutet auch, dass eine Trennung der Verbindung durch den Nutzer respektive Kunden nicht vorgesehen ist. Besonders vorteilhaft ist dabei eine dauerhafte Verbindung, so dass es keiner weiteren Zuordnung des Kommunikationsmoduls zu dem entliehenen Gegenstand bedarf.

Insbesondere bei einem fest und vorzugsweise dauerhaft mit dem entliehenen Gegenstand verbundenen Kommunikationsmodul ist ein Energiespeicher vorzusehen, welcher die für den Betrieb des Kommunikationsmoduls erforderliche Energie zur Verfügung stellt. Ein solcher Energiespeicher kann extern geladen werden, vorteilhafterweise kabellos mittels Induktionsladung, so dass hierfür keine Kontakte erforderlich sind. Eine weitere vorteilhafte Lösung ist das ausschließliche oder zusätzliche Laden mittels einem am entliehenen Gegenstand, beispielsweise an einem Einkaufswagengriff, vorgesehenen photovoltaischen Element. Wird der ausgeliehene Gegenstand in einem Gebäude genutzt, ist es von Vorteil, wenn das photovoltaische Element auf die Lichttemperatur und/oder Beleuchtungsstärke der Beleuchtung im Gebäude optimiert ist. Diese ist üblicherweise kälter als bzw. nicht so stark wie das normale Sonnenlicht.

Als Alternative oder Ergänzung hierzu eignet sich ein Mikrogenerator.

Neben dem Energiespeicher sollte das Kommunikationsmodul eine Recheneinheit und einen Datenspeicher aufweisen. Damit wird der Anbieter oder Nutzer des Rückgabesystems in die Lage versetzt, dass Kommunikationsmodul für die jeweils vorliegenden Rahmenbedingungen zu programmieren. Auf diese Weise ist es auch möglich, dem Kommunikationsmodul eine eindeutige, insbesondere individualisierende Kennung zuzuweisen.

Als Funktechnik eignet sich insbesondere BLE (Bluetooth low energie). Die hiermit erreichbare Reichweite der Funksignale ist ausreichend für die meisten Anwendungen des Verfahrens und benötigt wenig Energie zum Betrieb. Zudem ermöglicht bei bekannter Sendestärke des Sendemittels ein Messen der Signalstärke des empfangenen Signals eine Abstandsbestimmung, welche zur Bestimmung des Standorts herangezogen werden kann.

In einer bevorzugten Ausführungsform übermittelt das Kommunikationsmodul einem Kommunikations-Endgerät eines Nutzers, insbesondere einem Telekommunikations-Endgerät, drahtlos ein zweites Signal B. In dieser Ausführungsform weist das Kommunikationsmodul somit auch ein Sendemittel auf. Verfügt das Kommunikationsmodul über Empfangs-und Sendemittel, kann es nicht nur am entliehenen Gegenstand, sondern auch an der Sammelstelle zum Senden des ersten Signals A eingesetzt werden. Dies ermöglicht es, das Rückgabesystem kostengünstig mit baugleichen Modulen zu bestücken.

Mithilfe des zweiten Signals B können dem Nutzer des entliehenen Gegenstandes über sein Telekommunikations-Endgerät, insbesondere sein Smartphone, Informationen übermittelt werden. Von besonderem Vorteil ist es, wenn der Inhalt des zweiten Signals B von der jeweiligen Position und/oder Lage des entliehenen Gegenstandes abhängt. Dies ermöglicht vorzugsweise eine Ausführung, bei der das zweite Signal B Daten enthält, welche eine Belohnung und/oder Abrechnung und/oder Gutschrift auslösen, wenn der entliehene Gegenstand eine bestimmte Position und Lage in der Sammelstelle einnimmt.

Von besonderem Vorteil ist es insbesondere bei dieser Ausführungsform der Daten des zweiten Signals B, wenn die Daten des zweiten Signals B mittels Nahfeld-Kommunikation (NFC) an das Telekommunikations-Endgerät übertragen werden. Hierdurch ist es erforderlich, dass der Nutzer des entliehenen Gegenstandes sein Telekommunikation-Endgerät nahe an das Kommunikationsmodul bzw. dessen Sendemittel hält, um den Bonus übertragen zu bekommen. Andere sich im Bereich der Sammelstelle aufhaltende Nutzer befinden sich hingegen außerhalb der Signalreichweite und können das zweite Signal B nicht empfangen. Auf diese Weise wird sichergestellt, dass nur der berechtigte Nutzer den Bonus übertragen bekommt.

In einer weiteren Ausführungsform kann das zweite Signal B Daten enthalten, welche eine Information über die zum Erreichen einer bestimmten Position und Lage des entliehenen Gegenstands umfassen, wenn der entliehene Gegenstand die bestimmte Position noch nicht einnimmt. Dem Rücksteller des entliehenen Gegenstandes können hierdurch nicht nur eine Hilfestellung beim Zurückstellen, sondern auch ein Bonus übermittelt bzw. angezeigt werden.

In einer hierzu alternativen oder ergänzenden Ausführungsform werden Daten des zweiten Signals B an einen der Sammelstation zugeordneten Empfänger gesendet, welcher dem Nutzer die Daten dann in Bild- und/oder Sprachausgabe übermittelt. Dies kann beispielsweise ein Bildschirm sein, über den der Nutzer Hilfestellung zum korrekten Zurückstellen des entliehenen Gegenstandes erhält.

Vom besonderen Vorteil ist es, wenn das Kommunikationsmodul einen Gyro-Sensor aufweist. Ein solcher Sensor detektiert eine Beschleunigung des Kommunikationsmoduls. Er kann dazu genutzt werden, den Energiebedarf des Kommunikationsmoduls zu reduzieren. Wird über einen bestimmten Zeitabschnitt keine Beschleunigung festgestellt, kann davon ausgegangen werden, dass das Kommunikationsmodul und damit auch der mit ihm verbundene entliehene Gegenstand nicht bewegt wird. Ein Beispiel hierfür ist, wenn der entliehene Gegenstand in der Sammelstelle abgestellt wurde. In diesem Fall kann die Häufigkeit, in der das Kommunikationsmodul ein Signal aussendet, reduziert werden oder dies sogar ganz ausgesetzt werden, bis eine erneute Bewegung detektiert wird.

In einer hierzu ergänzenden oder alternativen Ausführungsform weist das Kommunikationsmodul ein Kompassmodul auf. Ein solches Kompassmodul kann ein digitaler Magnetometer sein. Der Kompass ermöglicht eine Orientierung in der Richtung, welche zur Bestimmung der Lage des Kommunikationsmoduls genutzt werden kann. Darüber hinaus wird hierdurch möglich, eine bestimmte Ausrichtung der Sammelstelle im Kommunikationsmodul vorzugeben, beispielsweise dass eine Reihe in der Sammelstelle in Richtung 240° ausgerichtet ist. Alternativ kann vorgesehen werden, eine solche Richtungsangabe in das erste Signal A zu integrieren.

Von Vorteil ist dabei, wenn das Kompassmodul wie auch die anderen Mittel des Kommunikationsmoduls auf einer Platine zusammengebaut werden können. Dies ermöglicht es, das Kommunikationsmodul als eine vor von außen auftretenden Einflüssen, wie beispielsweise Witterung, Vandalismus, Einflüsse bei Reinigungsarbeiten usw., geschützte Einheit zu verbauen, die vorzugsweise für Wartungs-, Reparatur-, oder Austauscharbeiten leicht von außen zugänglich gemacht wird.

Eine Kombination des Gyro-Sensors mit dem Kompassmodul ermöglicht die Lagebestimmung auf besonders einfache Weise.

Von besonderem Vorteil ist es auch, wenn das Telekommunikations-Endgerät mittels einer NFC-Verbindung mit dem entliehenen Gegenstand verknüpft wird und die Verknüpfung vor Absenden der Daten des zweiten Signals B, welche eine Belohnung und/oder Abrechnung und/oder Gutschrift auslösen, überprüft wird. Auf diese Weise kann zwischen einem Nutzer, der den von ihm entliehenen Gegenstand zurück bringt und einer sonstigen Person, die beispielsweise an einem anderen Ort stehen gelassene Einkaufswagen zurück in die Sammelstelle bringt, unterschieden werden. Die Unterscheidung ermöglicht eine differenzierte Reaktion, beispielsweise eine Anpassung des ausgegebenen Bonus.

Eine Alternative hierzu stellt eine Verknüpfung mittels BLE dar, mit der sichergestellt wird, dass die Kommunikationspartner eindeutig zugeordnet sind, insbesondere die Kommunikation nur zwischen dem Kommunikationsmodul und dem mit diesem verknüpften Kommunikations-Endgerät des entliehenen Gegenstandes erfolgt.

Erfindungsgemäß sendet das Kommunikationsmodul ein drittes Signal C drahtlos aus, anhand dessen ein Kommunikationsmodul eines zweiten entliehenen Gegenstands die Position und/oder Lage des zweiten Gegenstandes relativ zum ersten Gegenstand ermittelt. Auf diese Weise kann das Kommunikationsmodul eines ersten entliehenen Gegenstandes seinen Standort mithilfe der Kommunikationsmodule anderer entliehener Gegenstände bestimmen. Anhand des dritten Signals C lässt sich beispielsweise erkennen, ob mehrere Einkaufswagen in einer Reihe genestet sind. Zudem können die Kommunikationsmodule quasi als Relaisstationen für von der Sammelstelle ausgesendete erste Signale A wirken. Grundsätzlich werden die Kommunikationsmodule damit in die Lage versetzt, kontaktlos zu kommunizieren und gegebenenfalls Daten auszutauschen und abzuspeichern. Vorteilhafterweise kann sich das Kommunikationsmodul eines entliehenen Gegenstandes hierfür gegenüber den anderen Kommunikationsmitteln identifzieren, beispielsweise durch das Übersenden einer ID.

Von Vorteil ist es, wenn das Sendemittel der Sammelstelle an einem Ende der Sammelstelle angeordnet ist. Mit dem Ende ist der Bereich der Begrenzung der Sammelstelle gemeint, bis zu der ein entliehener Gegenstand in die Sammelstelle maximal eingestellt bzw. eingeschoben werden kann. So kann beispielsweise das Kommunikationsmodul eines entliehenen Gegenstandes anhand der Signalstärke erkennen, dass der entliehene Gegenstand z.B. am Ende der Sammelstelle abgestellt wurde. Erfindungsgemäß wird dem dritten Signal C eine Kennung hinzugefügt werden, welche diesen Status definiert. Ein Kommunikationsmodul des dahinter eingestellten entliehenen Gegenstands empfängt das dritte Signal C mit der Kennung. Durch Messen der Signalstärke wird der Abstand zu dem die Kennung aussendenden Kommunikationsmodul bestimmt und so erkannt, ob sein entliehener Gegenstand tief genug in der Sammelstelle eingestellt wurde. Darüber hinaus versieht es das von ihm ausgesendete dritte Signal C mit einer eigenen Kennung welche den vom Ende der Sammelstelle gesehenen Platz definiert, beispielsweise den zweiten Platz. Dieses Schema wird auch für alle weiteren in die Sammelstelle eingestellten entliehenen Gegenstände angewandt werden. Die Kennung wird somit als Zähler eingesetzt werden, welcher die Reihung in der Sammelstelle und/oder den Platz in der Reihung definiert.

Von besonderem Vorteil ist es dabei, das auf diese Weise erkannt werden kann, dass weitere entliehene Gegenstände in die Sammelstelle eingestellt wurden. Dies ist der Fall, wenn ein eine Kennung mit niedrigerem Zähler aussendendes Kommunikationsmodul ein drittes Signal C empfängt, welches eine Kennung mit höherem Zähler aufweist. Dann kann das Kommunikationsmodul mit dem niedrigeren Zähler das Senden seiner Kennung einstellen und damit Energie sparen.

Ein weiterer Vorteil dieser Kennung ist, dass hierdurch die maximale Länge einer Reihe entliehener Gegenstände vorgegeben werden kann. Hat eine Sammelstelle den maximalen Füllgrad von in Reihe angeordneten entliehenen Gegenständen erreicht, kann dem nächsten Rücksteller eines entliehenen Gegenstandes eine andere Reihe, gegebenenfalls sogar eine andere Sammelstelle zugewiesen werden.

Verfügt das Kommunikationsmodul über zwei in Seitenrichtung voneinander beabstandete Antennen oder sind pro entliehenem Gegenstand zwei entsprechend angeordnete Kommunikationsmodule vorgesehen, lässt sich damit der Abstand zwischen zwei in derselben Reihe einer Sammelstelle hintereinander eingestellten entliehenen Gegenständen feststellen. Hierzu ist es erforderlich, dass die von den voneinander beabstandeten Antennen bzw. den Kommunikationsmodulen gesendeten dritten Signale C eine Definition ihrer seitlichen Position enthalten. So muss bei der auf der linken Seite des entliehenen Gegenstandes positionierten Antenne oder bei dem links positionierten Kommunikationsmodul das von dort gesendete dritte Signal C ein Merkmal enthalten, dass es als Signal von links kennzeichnet. Analog gilt dies für die Antenne bzw. das Kommunikationsmodul auf der rechte Seite. Ist der Abstand zwischen den rechts und links angeordneten Antennen bzw. den rechts und links angeordneten Kommunikationsmodulen gespeichert, lässt sich durch Triangulation über die empfangene Signalstärke der Abstand zu den rechts und links angeordneten Antennen bzw. Kommunikationsmodulen des nächsten entliehenen Gegenstandes berechnen.

Auf diese Weise kann beispielsweise die Ausrichtung eines Einkaufwagens relativ zu den bereits in die Sammelstelle eingestellten Einkaufwagen ermittelt werden. Dies ist der Fall, wenn die Signalstärke zwischen linkem dritten Signal C des hinteren Einkaufswagens und rechten dritten Signal C des vorderen Einkaufswagens innerhalb einer gewissen Toleranz der Signalstärke zwischen rechten dritten Signal C des hinteren Einkaufswagens und linkem dritten Signal C des vorderen Einkaufswagens entspricht. Darüber hinaus ist feststellbar, ob ein Einkaufswagen richtig genestet wurde, also ausreichend tief in den vor ihm stehenden Einkaufswagen eingeschoben wurde. Dies ist der Fall, wenn beide der oben beschriebenen Signalverbindungen eine bestimmte Mindeststärke erreichen.

Des Weitern kann festgestellt werden, ob der Einkaufswagen verkehrt herum in die Sammelstelle eingeschoben wurde. Dies ist der Fall, wenn die Signalstärke zwischen den linken Antennen bzw. Kommunikationsmodulen zweier Einkaufswagen geringer ist als die Signalstärke zwischen den rechten Antennen bzw. Kommunikationsmodulen dieser Einkaufswagen.

Zwar ermöglicht schon die Messung von der Signalstärke zweier Signalpaare in den meisten Fällen eine Bestimmung einer ordnungsgemäßen Nestung. Von besonderem Vorteil ist es aber, wenn nicht nur die Signalstärke von zwei Signalpaaren gemessen wird, also der Verbindung zwischen rechtem Signal C eines ersten Einkaufswagens und linkem Signal C eines zweiten Einkaufswagens, sowie linkem Signal C eines ersten Einkaufswagens und rechtem Signal C eines zweiten Einkaufswagens bzw. der Verbindung zwischen rechtem Signal C eines ersten Einkaufswagens und rechtem Signal C eines zweiten Einkaufswagens, sowie linkem Signal C eines ersten Einkaufswagens und linkem Signal C eines zweiten Einkaufswagens. Werden die Signalstärken aller vier Signalpaare gemessen, ist die Position und Lage wesentlich exakter zu bestimmen.

Entsprechendes gilt natürlich auch für den ersten in eine Sammelstelle eingestellten Gegenstand, wenn statt eines Sendemittels ein rechts und ein links angeordnetes Sendemittel ein erstes Signal A übermitteln, welche deren Position definiert.

Verfügt das Kommunikationsmodul über mehrere voneinander beabstandete Antennen oder sind pro entliehenem Gegenstand mehrere Kommunikationsmodule vorgesehen, lässt sich analog zu dem oben Gesagten auch der Abstand zwischen zwei in verschiedenen Reihen einer Sammelstelle eingestellten entliehenen Gegenständen feststellen. Dieses Merkmal kann ebenfalls zur Position und/oder Lagebestimmung herangezogen werden.

Ebenfalls von Vorteil ist es, wenn ein Bereich, insbesondere der Bereich eines Geschäfts, ein viertes Signal D drahtlos aussendet, welches vom Kommunikationsmodul eines entliehenen Gegenstandes empfangen wird, wenn es sich in diesem Bereich aufhält. In einer bevorzugten Ausführungsform wird dieses Signal von einem der hier beschriebenen Kommunikationsmodul gesendet, was es erlaubt, mehr Gleichteile einzusetzen. Das vierte Signal D ermöglicht die Ermittlung, ob der entliehene Gegenstand einen bestimmten Bereich durchlaufen hat. Bezogen auf ein Geschäft kann dieser Bereich der Kassenbereich sein, aber auch eine bestimmte Abteilung oder noch kleinteiligere Abschnitte. Dies erlaubt es wiederum, Kenntnis über die vom Nutzer des entliehenen Gegenstands, beispielsweise einem Einkaufswagen, durchlaufenden Bereiche zu erhalten.

Alternativ hierzu ist es möglich, dass ein Kommunikationsmodul ein viertes Signal D aussendet und dieses von einer Empfangsstelle aufgenommen wird, wenn sich das Kommunikationsmodul in deren Bereich aufhält.

Von besonderem Vorteil ist es dabei, wenn die mittels des zweiten Signals B ausgegebenen Daten hinsichtlich der Höhe der Belohnung und/oder Abrechnung und/oder Gutschrift davon abhängt, ob der entliehene Gegenstand einen bestimmten Bereich durchlaufen hat und/oder wie lange er sich in einem bestimmten Bereich aufgehalten hat und/oder welche Umsätze dem Nutzer des entliehenen Gegenstandes zugeordnet werden. Die Umsätze lassen sich beispielsweise über Apps ermitteln, die dem Kunden zur Zahlungsabwicklung oder zum self-scannen zu Verfügung gestellt wurden.

Ein weiterer Vorteil des Systems ist es, dass auch ein Kunde ohne Smartphone es nutzen kann. Er ist in der Lage den zu entleihenden Gegenstand ohne Restriktionen ZB aus einer Sammelstelle zu entnehmen und nach Gebrauch wieder zurückzustellen. Verfügt er über eine Kundenkarte oder Geldkarte mit integrierter Nahfeld-Kommunikation, beispielsweise einem NFC-Chip, lässt sich diese zum Verknüpfen des entliehenen Gegenstandes mit dem Kunden nutzen. Des Weiteren wird es möglich, dass auch dem so identifizierten Kunden ein Bonus gutgeschrieben wird, beispielsweise über ein Bonussystem wie payback.

Grundsätzlich ist ein nicht erfindungsgemäßes Verfahren bzw. System dazu geeignet, ohne das ein erstes Signal A sendendes Sendemittel zu funktionieren. Auch ohne das erste Sendemittel, sogar ohne Sammelstelle ist es in der Lage, das Zusammenstellen entliehene Gegenstände zu detektieren und deren ordnungsgemäße Ausrichtung zueinander festzustellen.

## Patentansprüche

1. Verfahren zum Betrieb eines elektronisch geregelten Rückgabesystems für ausgeliehene Gegenstände, insbesondere für von Hand bewegbare Transportwagen,
**dadurch gekennzeichnet,**
**dass** der ausgeliehene Gegenstand fest mit einem Kommunikationsmodul verbunden ist, welches ein drahtlos gesendetes erstes Signal A eines Sendemittels einer Sammelstelle empfängt, wobei das Kommunikationsmodul ein Mittel zur Auswertung der Position und Lage des ausgeliehenen Gegenstands umfasst, welches das erste Signal A zur Positionsbestimmung und Lagebestimmung des ausgeliehenen Gegenstands relativ zum Sendemittel nutzt, wobei bei bekannter Position und Lage des ausgeliehenen Gegenstandes in Bezug auf die Sammelstelle festgestellt wird, ob der ausgeliehene Gegenstand in der Sammelstelle eingestellt ist, wobei das Kommunikationsmodul ein drittes Signal C drahtlos aussendet, anhand dessen ein Kommunikationsmodul eines zweiten entliehenen Gegenstands die Position und/oder Lage des zweiten Gegenstandes relativ zum ersten Gegenstand ermittelt und wobei dem dritten Signal C eine Kennung hinzugefügt wird, die als Zähler eingesetzt wird, wobei der Zähler die Reihung in der Sammelstelle und/oder den Platz in der Reihung definiert, und durch Messen der Signalstärke der Abstand zu dem die Kennung aussendenden Kommunikationsmodul bestimmt wird.

2. Verfahren nach Anspruch 1,
**dadurch gekennzeichnet,**
**dass** das Kommunikationsmodul einem Kommunikations-Endgerät eines Nutzers, insbesondere einem Telekommunikations-Endgerät, drahtlos ein zweites Signal B übermittelt, wobei der Inhalt des zweiten Signals B von der jeweiligen Position und/oder Lage des entliehenen Gegenstandes abhängt.

3. Verfahren nach Anspruch 2,
**dadurch gekennzeichnet,**
**dass** das zweite Signal B Daten enthält, welche eine Belohnung und/oder Abrechnung und/oder Gutschrift auslösen, wenn der entliehene Gegenstand eine bestimmte Position und Lage in der Sammelstelle einnimmt.

4. Verfahren nach Anspruch 2 oder 3,
**dadurch gekennzeichnet,**
**dass** die Daten des zweiten Signals B mittels einer Drahtlostechnik mit geringer Reichweite, insbesondere mittels NFC, an das Kommunikations-Endgerät eines Nutzers übertragen werden.

5. Verfahren nach einem der vorherigen Ansprüche,
**dadurch gekennzeichnet,**
**dass** das zweite Signal B Daten enthält, welche eine Information über die zum Erreichen einer bestimmten Position und Lage des entliehenen Gegenstands umfassen, wenn der entliehene Gegenstand die bestimmte Position noch nicht einnimmt.

6. Verfahren nach einem der Ansprüche 3 bis 5,
**dadurch gekennzeichnet,**
**dass** das Telekommunikations-Endgerät mittels einer Drahtlostechnik mit geringer Reichweite, insbesondere mittels NFC, mit dem entliehenen Gegenstand verknüpft wird und die Verknüpfung vor Absenden der Daten des zweiten Signals, welche eine Belohnung und/oder Abrechnung und/oder Gutschrift auslösen, überprüft wird.

7. Verfahren nach einem der vorherigen Ansprüche,
**dadurch gekennzeichnet,**
**dass** in einem Bereich eines Geschäfts ein viertes Signal D drahtlos ausgesendet wird, welches vom Kommunikationsmodul eines entliehenen Gegenstandes empfangen wird, wenn es sich in diesem Bereich aufhält.

8. Verfahren nach Anspruch 7 in Verbindung mit einem der Ansprüche 3 bis 6,
**dadurch gekennzeichnet,**
**dass** die Höhe der Belohnung und/oder Abrechnung und/oder Gutschrift davon abhängt, ob der entliehene Gegenstand einen bestimmten Bereich durchlaufen hat und/oder wie lange er sich in einem bestimmten Bereich aufgehalten hat und/oder welche Umsätze dem Nutzer des entliehenen Gegenstandes zugeordnet werden.

9. Elektronisch geregeltes Rückgabesystem zum Betrieb eines Verfahrens gemäß einem der Ansprüche 1-8, aufweisend eine Sammelstelle und ein mit einem entliehenen Gegenstand fest verbundenes Kommunikationsmodul, wobei das Kommunikationsmodul ein Empfangsmittel zum Empfangen eines drahtlos gesendeten ersten Signals A eines Sendemittels der Sammelstelle aufweist und wobei das Kommunikationsmodul ein Sendemittel zum Senden eines drahtlos gesendeten zweiten Signals B an ein Kommunikations-Endgerät, insbesondere ein Telekommunikations-Endgerät, eines Rückstellers des entliehenen Gegenstandes in die Sammelstelle und/oder eines drahtlos gesendeten dritten Signals C an ein Empfangsmittel eines mit einem weiteren entliehenen Gegenstand fest verbundenen Kommunikationsmoduls aufweist.

## Claims

1. Method of operating an electronically regulated return system for borrowed objects, more particularly for manually movable transport carts,
**characterised in that**
the borrowed object is permanently connected to a communication modules, which receives a wirelessly transmitted first signal A of a transmission means of a collection point, wherein the communications module comprises a means for evaluating the position and location of the borrowed object, which utilises the first signal A to determine the position and location of the borrowed object relative to the transmission means, wherein when the position and location of the borrowed object in relation to the collection point are known, it is determined whether the borrowed object is placed in the collection point, wherein the communications module wirelessly sends out a third signal C by way of which the communications module of a second borrowed object determines the position and/or location of the second borrowed object relative to the first object and wherein an identifier is added to the third signal C which is used as a counter, wherein the counter defines the line-up in the collection point and/or the place in the line-up, and through measuring the signal strength, the distance to the communications module sending out the identifier is determined.

2. Method according to claim 1
**characterised in that**
the communications module wirelessly transmits a second signal B to a communications terminal of a user, more particularly a telecommunications terminal, wherein the content of the second signal B is dependent on the respective position and/or location of the borrowed obj ect.

3. Method according to claim 2
**characterised in that**
the second signal B contains data which trigger a reward and/or settlement and/or credit when the borrowed object assumes a certain position and location in the collection point.

4. Method according to claim 2 or 3
**characterised in that**
the data of the second signal B are transmitted by means of a short-range wireless technology, more particularly by means of NFC, to a user's communications terminal.

5. Method according to any one of the preceding claims **characterised in that**
the second signal B contains data, which include information about the borrowed object reaching a certain position and location, if the borrowed object is not yet in the determined position.

6. Method according to any one of claims 3 to 5 **characterised in that**
the telecommunications terminal is connected by means of a short-range wireless technology, in particular by means of NFC, to the borrowed object, and the connection is checked before sending the data of the second signal which trigger a reward and/or settlement and/or credit.

7. Method according to any one of the preceding claims **characterised in that**
in an area of a store, a fourth signal D is sent out, which is received by the communications module of a borrowed object if it is located in this area.

8. Method according to claim 7 in conjunction with any one of claims 3 to 6
**characterised in that**
the amount of the reward and/or settlement and/or credit is dependent on whether the borrowed object has passed through a certain area and/or how long it has stayed in a certain area and/or which sales are assigned to the user of the borrowed object.

9. Electronically regulated return system for using a method according to any one of claims 1 to 8, comprising a collection point and a communications module permanently connected to a borrowed object, wherein the communications module comprises a receiving means for receiving a wirelessly sent first signal A from a transmission means of the collection point, and wherein the communication means comprises a transmission means for transmitting a wirelessly sent out second signal B to a communications terminal, more particularly a telecommunications terminal of a returner of the borrowed object to the collection point, and/or a wirelessly sent out third signal to a receiving mean of a communications module permanently connected to a further borrowed object.

## Revendications

1. Procédé opérationnel d'un système de restitution réglé par électronique d'objet empruntés, notamment de chariots de transport déplaçables manuellement,
**caractérisé en ce que**
l'objet emprunté est fixement connecté avec un module de communication, lequel réceptionne un premier signal A émis sans fil d'un moyen émetteur d'un point de collecte, le module de communication comprenant un moyen destiné à évaluer la position et la situation de l'objet emprunté, lequel utilise le premier signal A pour déterminer la position et pour déterminer la situation de l'objet emprunté par rapport au moyen émetteur, lors duquel, lorsque la position et la situation de l'objet emprunté par rapport au point de collecte est connue, il est déterminé si l'objet emprunté est déposé au point de collecte, le module de communication émettant sans fil un troisième signal C, à l'aide duquel un module de communication d'un deuxième objet emprunté détermine la position et/ou la situation du deuxième objet par rapport au premier objet et au troisième signal C étant ajoutée une identification qui est utilisée en tant que compteur, le compteur définissant l'ordre hiérarchique dans le point de collecte et/ou l'emplacement dans la hiérarchie et par mesure de l'intensité de signal, l'écart par rapport au module de communication qui émet l'identification étant spécifié.

2. Procédé selon la revendication 1,
**caractérisé en ce que**
le module de communication transmet sans fil un deuxième signal B à un terminal de communication d'un utilisateur, notamment à un terminal de télécommunication, le contenu du deuxième signal B dépendant de la position et/ou de la situation respective de l'objet emprunté.

3. Procédé selon la revendication 2,
**caractérisé en ce que**
le deuxième signal B contient des données, lesquelles déclenchent une récompense et/ou un décompte et/ou un avoir lorsque l'objet emprunté adopte une certaine position et situation au point de collecte.

4. Procédé selon la revendication 2 ou 3,
**caractérisé en ce que**
les données du deuxième signal B sont transmises par technique sans fil de faible portée, notamment par NFC au terminal de communication d'un utilisateur.

5. Procédé selon l'une quelconque des revendications précédentes,
**caractérisé en ce que**
le deuxième signal B contient des données, lesquelles comprennent une information sur le d'atteinte d'une certaine position et situation de l'objet emprunté, lorsque l'objet emprunté n'adopte pas encore la certaine position.

6. Procédé selon l'une quelconque des revendications 3 à 5,
**caractérisé en ce que**
le terminal de télécommunication est interconnecté par une technique sans fil de faible portée, notamment par NFC avec l'objet emprunté et l'interconnexion est vérifiée avant l'envoi des données du deuxième signal, lesquelles déclenchent une récompense et/ou un décompte et/ou un avoir.

7. Procédé selon l'une quelconque des revendications précédentes,
**caractérisé en ce que**
dans une zone d'un commerce est émis un quatrième signal D, lequel est réceptionné par un module de communication d'un objet emprunté, lorsqu'il s'arrête dans ladite zone.

8. Procédé selon la revendication 7, en association avec l'une quelconque des revendications 3 à 6,
**caractérisé en ce que**
le montant de la récompense et/ou du décompte et/ou de l'avoir dépend du fait si l'objet emprunté a traversé une certaine zone et/ou combien de temps il s'est arrêté dans une certaine zone et/ou quels chiffres d'affaires sont affectés à l'utilisateur de l'objet emprunté.

9. Système de restitution réglé par électronique, destiné à faire fonctionner un procédé selon l'une quelconque des revendications 1 à 8, comportant un point de collecte et un module de communication fixement connecté avec un objet emprunté, le module de communication comportant un moyen récepteur, destiné à réceptionner un premier signal A émis sans fil par un moyen émetteur du point de collecte et le module de communication comportant un moyen émetteur, destiné à émettre un deuxième signal B émis sans fil à un terminal de communication, notamment à un terminal de télécommunication d'un dispositif de restitution de l'objet emprunté au point de collecte et/ou un troisième signal C émis sans fil vers un moyen récepteur d'un module de communication fixement connecté avec un autre objet emprunté.
